(19) Europäisches Patentamt
European Patent Office
Office européen des brevets

(11) EP 4 583 223 A1

(12) **EUROPEAN PATENT APPLICATION**
published in accordance with Art. 153(4) EPC

(43) Date of publication:
09.07.2025 Bulletin 2025/28

(21) Application number: 23859904.7

(22) Date of filing: 25.07.2023

(51) International Patent Classification (IPC):
$H01M\ 10/052^{(2010.01)}$    $H01M\ 4/134^{(2010.01)}$
$H01M\ 50/423^{(2021.01)}$    $H01M\ 50/434^{(2021.01)}$
$H01M\ 50/443^{(2021.01)}$    $H01M\ 50/446^{(2021.01)}$
$H01M\ 50/451^{(2021.01)}$    $H01M\ 50/46^{(2021.01)}$
$H01M\ 50/463^{(2021.01)}$

(52) Cooperative Patent Classification (CPC):
H01M 4/134; H01M 10/052; H01M 50/423;
H01M 50/434; H01M 50/443; H01M 50/446;
H01M 50/451; H01M 50/46; H01M 50/463;
Y02E 60/10

(86) International application number:
PCT/JP2023/027197

(87) International publication number:
WO 2024/048135 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.08.2022 JP 2022137978

(71) Applicant: Panasonic Intellectual Property
Management Co., Ltd.
Kadoma-shi, Osaka 571-0057 (JP)

(72) Inventors:
• KONDO, Shinichiro
Kadoma-shi, Osaka 571-0057 (JP)
• MIYAMAE, Ryohei
Kadoma-shi, Osaka 571-0057 (JP)
• KANO, Akira
Kadoma-shi, Osaka 571-0057 (JP)

(74) Representative: Novagraaf International SA
Chemin de l'Echo 3
1213 Onex, Geneva (CH)

(54) **LITHIUM SECONDARY BATTERY AND COMPOSITE MEMBER**

(57) A disclosed lithium secondary battery includes a positive electrode, a negative electrode, a separator (50) disposed between the positive electrode and the negative electrode, a spacer (53) disposed on the separator (50), and a non-aqueous electrolyte having lithium-ion conductivity. The negative electrode is an electrode onto which lithium metal is deposited during charging and from which lithium metal dissolves during discharging. The separator (50) includes a base layer (51) and a composite material layer (52). In a plan view, the shortest distance from any point on the spacer (53) to the outer edge of the spacer (53) is less than 1.5 mm, and the spacer (53) has a width of 0.01 mm or more. The composite material layer (52) contains a polymer and inorganic particles.

FIG. 2

**Description**

[Technical Field]

The present disclosure relates to a lithium secondary battery and a composite member.

[Background Art]

Non-aqueous electrolyte secondary batteries are used in ICT applications such as personal computers and smartphones, in-vehicle applications, power storage applications, and the like. In such applications, non-aqueous electrolyte secondary batteries are required to have a higher capacity. Lithium-ion batteries are known as high-capacity non-aqueous electrolyte secondary batteries. Lithium-ion batteries can reach a high capacity by using, for example, graphite and an alloy active material such as a silicon compound in combination as a negative electrode active material. However, increases in the capacity of lithium-ion batteries are reaching a limit.

Lithium secondary batteries (lithium metal secondary batteries) are promising as non-aqueous electrolyte secondary batteries with high capacities that exceed those of lithium-ion batteries. In a lithium secondary battery, lithium metal is deposited on the negative electrode during charging, and this lithium metal dissolves in the non-aqueous electrolyte during discharging. Various proposals have conventionally been made regarding lithium secondary batteries.

PTL 1 (WO 2020/066254 A1) describes "a lithium secondary battery including: a positive electrode including a positive electrode current collector and a positive electrode mixture layer including a positive electrode active material; a negative electrode including a negative electrode current collector facing the positive electrode; a separator disposed between the positive electrode and the negative electrode; and a non-aqueous electrolyte having lithium-ion conductivity, in which the positive electrode active material includes a composite oxide including lithium and a metal M other than lithium, the metal M including at least a transition metal, lithium metal is deposited on the negative electrode during charging and the lithium metal dissolves from the negative electrode during discharging, a first length in a first direction D1 of the positive electrode current collector is smaller than a second length in a second direction D2 intersecting with the first direction, a spacer is provided between the positive electrode and the separator such that a space for accommodating the lithium metal is formed between the positive electrode and the negative electrode, and a straight line SL can be drawn along the first direction D1 so as to pass through the spacer at three or more points".

[Citation List]

[Patent Literature]

PTL 1: WO 2020/066254 A1

[Summary of Invention]

[Technical Problem]

Currently, there is demand for further improvements in the characteristics of lithium secondary batteries. One object of the present disclosure is to provide a lithium secondary battery in which expansion of an electrode group during charging (e.g., expansion in the vicinity of the negative electrode) is small and a cycle characteristic is favorable.

[Solution to Problem]

One aspect of the present disclosure relates to a lithium secondary battery. The lithium secondary battery includes: a positive electrode; a negative electrode; a separator disposed between the positive electrode and the negative electrode; a spacer disposed on the separator; and a non-aqueous electrolyte having lithium-ion conductivity, in which the negative electrode is an electrode onto which lithium metal is deposited during charging and from which the lithium metal dissolves during discharging, the separator includes a base layer and a composite material layer, in a plan view, the shortest distance from any point on the spacer to an outer edge of the spacer is less than 1.5 mm, and the spacer has a width of 0.01 mm or more, and the composite material layer contains a polymer and inorganic particles.

Another aspect of the present disclosure relates to a composite member. The composite member includes: a separator having a base layer and a composite material layer; and a spacer, in which in a plan view, the shortest distance from any point on the spacer to an outer edge of the spacer is less than 1.5 mm, and the spacer has a width of 0.01 mm or more, and the composite material layer contains a polymer and inorganic particles.

[Advantageous Effects of Invention]

According to the present disclosure, a lithium secondary battery can be obtained in which expansion of an electrode group during charging (e.g., expansion in the vicinity of the negative electrode) is small and a cycle characteristic is favorable.

Novel features of the present invention are set forth in the appended claims, but the present invention, both in terms of structure and content, together with other objects and features of the present invention, will be better understood from the following detailed description taken in conjunction with the drawings.

[Brief Description of Drawings]

FIG. 1 is a longitudinal cross-sectional view schematically showing an example of a lithium secondary battery according to an embodiment of the present disclosure.

FIG. 2 is a cross-sectional view schematically showing a portion of the lithium secondary battery shown in FIG. 1.

FIG. 3 is a top view showing an example of a pattern of a spacer.

FIG. 4 is a partially enlarged view of FIG. 3.

FIG. 5 is a top view showing another example of a pattern of a spacer.

FIG. 6 is a top view showing another example of a pattern of a spacer.

FIG. 7 is a top view showing another example of a pattern of a spacer.

[Description of Embodiments]

Hereinafter, embodiments of the present disclosure will be described by way of examples, but the embodiments of the present disclosure are not limited to the examples described below. In the following description, specific numeric values and materials may be given as examples, but other numeric values and materials may also be applied as long as the invention according to the present disclosure can be implemented. In this specification, the expression "numeric value A to numeric value B" includes numeric value A and numeric value B, and can be read as "numeric value A or more and numeric value B or less". In the following description, when a lower limit and an upper limit are given as examples for numeric values of specific physical properties, conditions, and the like, any of the exemplified lower limits can be combined with any of the exemplified upper limits in any combination, as long as the lower limit is not greater than or equal to the upper limit.

(Lithium Secondary Battery)

A lithium secondary battery according to an embodiment of the present disclosure (hereinafter referred to in some cases as a "lithium secondary battery (L)") includes a positive electrode, a negative electrode, a separator disposed between the positive electrode and the negative electrode, a spacer formed on the separator, and a non-aqueous electrolyte having lithium-ion conductivity. The negative electrode is an electrode onto which lithium metal is deposited during charging and from which lithium metal dissolves during discharging. The separator includes a base layer and a composite material layer. In a plan view, the shortest distance from any point on the spacer to the outer edge of the spacer is less than 1.5 mm, and the width of the spacer is 0.01 mm or more. The composite material layer contains a polymer and inorganic particles.

"Plan view" means viewing an object placed on a flat surface from a normal direction of the surface. For example, a plan view of a spacer formed on a separator means that the separator is placed on a flat surface and the spacer is viewed from the normal direction of the surface.

The spacer may include linear protrusions, or may include dot-shaped (island-shaped) protrusions. The spacer may be constituted of only linear protrusions, may be constituted of only dot-shaped protrusions, or may be constituted of linear protrusions and dot-shaped protrusions. The planar shape of the dot-shaped protrusions is not particularly limited, and may be circular (perfectly circular or elliptical), polygonal (triangular, quadrangular, etc.), or the like.

In a plan view, the shortest distance from any point on the spacer to the outer edge of the spacer may be referred to as "shortest distance D" hereinafter. The width of the spacer in a plan view may be referred to as "width W" hereinafter. If the spacer includes linear protrusions, the width W of a linear protrusion is the length (width) of the linear protrusion in a direction perpendicular to the direction in which the linear protrusion extends in a plan view. If the spacer includes dot-shaped protrusions, the width W of a dot-shaped protrusion is the shortest diameter of the planar shape of the dot-shaped protrusion that passes through the center of gravity of the planar shape in a plan view.

The spacer forms a space (hereinafter referred to in some cases as a "space (S)") between the positive electrode and the negative electrode. By setting the width W to 0.01 mm or more, it is easier to maintain the space (S). As a result, expansion of the electrode group during charging can be suppressed. In addition, by setting the shortest distance D to less than 1.5 mm, a decrease in the fluidity of the electrolyte can be suppressed. As a result, a cycle characteristic of the lithium secondary battery (L) can be improved.

As a result of investigation, the inventors of the present application have newly discovered that the effect can be dramatically improved by not only setting the shortest distance D and width W within the above ranges, but also by combining them with a predetermined composite material layer. The present disclosure is based on this new finding.

At present, it is not clear why a significant effect is obtained by combining a spacer having a shortest distance D and a width W within the above ranges with a composite material layer. The composite material layer has high electrolyte circulation and high strength, and therefore there is a possibility that a significant effect is obtained by combining the composite material layer with the above-described spacer.

In the lithium secondary battery (L), the space between the positive electrode and the negative electrode is ensured by the spacer. During charging, lithium metal is deposited on the surface of the negative electrode. By providing a space between the positive electrode and the negative electrode, expansion of the electrode group when lithium metal is deposited can be suppressed.

Furthermore, the separator of the lithium secondary battery (L) includes a composite material layer formed on the surface of the base layer. This composite material layer can suppress contraction of the base layer when the temperature of the electrode group rises excessively. When the base layer shrinks, the positive electrode and the negative electrode are more likely to short-circuit, and the temperature of the electrode group is likely to further rise. By including the composite material layer in the separator, contraction of the base layer can be suppressed, and therefore a further rise in temperature of the electrode group can be suppressed.

In addition, if a spacer is formed on the positive electrode, the spacer covers the surface of the positive electrode, and therefore the transfer of lithium ions by the positive electrode active material is partially inhibited. This may result in a decrease in cell capacity. On the other hand, in the lithium secondary battery (L), a spacer is formed on the separator, and therefore the above problem can be avoided.

The lithium secondary battery (L) is also called a lithium metal secondary battery. In the negative electrode of this type of battery, lithium metal is deposited during charging and dissolves during discharging. Specifically, the negative electrode has at least a negative electrode current collector, and lithium metal is deposited on the negative electrode current collector.

In the lithium secondary battery (L), for example, 70% or more of the rated capacity is realized by deposition and dissolution of lithium metal. The movement of electrons at the negative electrode during charging and discharging is mainly due to the deposition and dissolution of lithium metal at the negative electrode. Specifically, 70 to 100% (for example, 80 to 100% or 90 to 100%) of the movement of electrons (or, from another perspective, current) at the negative electrode during charging and discharging is due to the deposition and dissolution of lithium metal. That is, the negative electrode of the lithium secondary battery (L) differs from a negative electrode in which the movement of electrons in the negative electrode during charging and discharging is mainly due to the absorption and release of lithium ions by the negative electrode active material (graphite, etc.). An exemplary negative electrode does not include a negative electrode active material (graphite, etc.) that absorbs and releases lithium ions.

Hereinafter, the positive electrode, the negative electrode, and the separator may be collectively referred to as an "electrode group". The positive electrode, the negative electrode, and the separator may be wound such that the separator is disposed between the positive electrode and the negative electrode. When forming a wound electrode group, a strip-shaped positive electrode, a strip-shaped negative electrode, and a strip-shaped separator are used. Alternatively, the positive electrode, the negative electrode, and the separator may also be laminated on each other. For example, a flat positive electrode, a flat negative electrode, and a flat separator may be laminated on each other. That is, the electrode group may be a wound electrode group or a laminated electrode group.

(Separator)

As described above, the separator includes a base layer and a composite material layer. The separator has a first main surface facing the negative electrode and a second main surface facing the positive electrode. The spacer may be formed on the first main surface or on the second main surface.

(Base layer)

The base layer is made of a porous sheet having ion permeability and insulating properties. Examples of the porous sheet include a porous film, a woven fabric, a nonwoven fabric, and the like. The material of the separator is not particularly limited, but may be a polymer material. Examples of the polymer material include polyolefin resin, polyamide resin, cellulose, and the like. Examples of the polyolefin resin include polyethylene, polypropylene, and copolymers of ethylene and propylene. The base layer may also contain additives as necessary. Examples of the additives include inorganic fillers. The base layer may be a sheet used as a separator for a lithium secondary battery.

(Spacer)

The width W of the spacer in a plan view is 0.01 mm or more, and may be 0.02 mm or more, 0.2 mm or more, or 0.5 mm or more. The width W may be 2.0 mm or less, 1.5 mm or less, 1.0 mm or less, or 0.6 mm or less. The width W may be in the range of 0.01 to 2.0 mm, in the range of 0.02 to 2.0 mm, in the range of 0.2 to 2.0 mm, or in the range of 0.5 to 2.0 mm. Within these ranges, the upper limit may be 1.5 mm, 1.0 mm, or 0.6 mm.

In a linear protrusion that does not intersect with other protrusions, the shortest distance D is half the width W. If a linear protrusion with a width W and a linear protrusion with a width W are perpendicular to each other, the shortest distance D at the center of the intersection is $W/\sqrt{2}$. For example, if a linear protrusion with a width W of 2 mm and a linear protrusion with a width W of 2 mm intersect each other at a right angle, the shortest distance D at the center of the intersection is approximately 1.4 mm (more specifically, $2/\sqrt{2}$ mm).

The shortest distance D is less than 1.5 mm, and may be 1.4 mm or less (including less than 1.45 mm), 1.0 mm or less, 0.8 mm or less, 0.5 mm or less, or 0.3 mm or less. Any of the upper limits of the shortest distance D given as an example here can be combined as appropriate with any of the lower limits of the width W described above, as long as there is no contradiction in the description. For example, the width W may be any one of 0.01 mm or more, 0.02 mm or more, 0.2 mm or more, and 0.5 mm or more, and the shortest distance D may be less than 1.5 mm, 1.4 mm or less, 1.0 mm or less, 0.8 mm or less, or 0.5 mm or less. Here, the upper limit of the shortest distance D may be selected from values greater than $W/\sqrt{2}$.

The spacer may contain a resin (e.g., an insulating resin) or may contain a resin and particles. The spacer may be constituted of only resin, or may be constituted of resin and particles. The proportion of the resin in the spacer may be 10 vol% or more, 30 vol% or more, or 50 vol% or more, and may be 100 vol% or less, or 80 vol% or less. The particle content in the spacer may be lower than the particle content in the composite material layer.

The resin material is, for example, a fluorine-containing resin such as polyvinylidene fluoride (PVdF) and polytetrafluoroethylene, a fluorine-containing rubber such as vinylidene fluoride-tetrafluoroethylene copolymer and ethylene-tetrafluoroethylene copolymer, styrene-butadiene copolymer or a hydrogenated product thereof, acrylonitrile-butadiene copolymer or a hydrogenated product thereof, methacrylic acid ester-acrylic acid ester copolymer, styrene-acrylic acid ester copolymer, acrylonitrile-acrylic acid ester copolymer, ethylene propylene rubber, polyvinyl alcohol, polyvinyl acetate, and other rubbers, cellulose derivatives such as ethyl cellulose, methyl cellulose, hydroxyethyl cellulose, and carboxymethyl cellulose, acrylic resins such as acrylic acid-metharylic acid copolymer, polyphenylene ether, polysulfone, polyether sulfone, polyphenylene sulfide, polyetherimide, polyimide, a polyamide such as a wholly aromatic polyamide (aramid), a polyamide-imide, polyacrylonitrile, polyvinyl alcohol, polyether, polyacrylic acid, polymethacrylic acid, polyester, polyolefin, silicone resin, urethane resin, melamine resin, urea resin, and epoxy resin.

Among the above-mentioned resin materials, a polyimide, polyvinylidene fluoride, acrylonitrile-acrylic acid ester copolymer, and the like are preferable as materials through which lithium ions do not pass, and a polyimide may be used. A non-porous spacer constituted of these resin materials and having a certain height or more is a layer through which lithium ions do not pass. The average height of the spacer may be 3 times or more, 5 times or more, or 10 times or more the average thickness of the composite material layer, and may be 100 times or less, 30 times or less, or 20 times or less the average thickness of the composite material layer.

The particles may be inorganic particles or organic particles. Among these, inorganic particles such as insulating metal oxides, metal hydroxides, metal nitrides, metal carbides, and metal sulfides can be given as examples. Preferred examples of metal oxides include aluminum oxide (alumina and boehmite), magnesium oxide, titanium oxide (titania), zirconium oxide, and silicon oxide (silica). Examples of metal hydroxides include aluminum hydroxide. Examples of metal nitrides include silicon nitride, aluminum nitride, boron nitride, and titanium nitride. Examples of metal carbides include silicon carbide and boron carbide. Examples of metal sulfides include barium sulfate. In addition, minerals such as aluminosilicate, layered silicate, barium titanate, and strontium titanate may also be used. Among these, it is preferable to use alumina, silica, titania, and the like.

The average particle diameter of the particles is not particularly limited, but may be 0.1 μm or more, or 0.5 μm or more, and may be 10 μm or less, 5 μm or less, or 2 μm or less. The average particle diameter can be measured using the following method. First, a cross section of the spacer in the thickness direction of the separator is imaged with an electron microscope to obtain an image of the cross section. Next, the image is subjected to image processing such as binarization to identify particle portions. Next, the diameter of a circle having the same area as the cross-sectional area of each particle (equivalent circle diameter) is determined, and the arithmetic average of the determined equivalent circle diameters can be regarded as the average particle diameter. The arithmetic average can be determined from, for example, 100 or more particles. Note that the average particle diameter of other particles contained in the electrode plates and the separator can also be determined using a similar method.

If the spacer contains a resin material and particles, the content of the particles in the spacer is preferably 50 vol% or less. This makes it easier to ensure that the spacer has sufficient strength.

In general, the lower the average height Hs of the spacer is, the more the strength of the spacer can be maintained even if the shortest distance D is made smaller. A ratio D/Hs of the shortest distance D to the average height Hs may be 0.05 or more, 0.10 or more, 0.15 or more, 1.0 or more, or 5.0 or more, or may be 5.0 or less, 10 or less, 20 or less, or 50 or less. By setting the ratio D/Hs in the range of 0.10 to 20, it is possible to obtain an effect such as making it easier to maintain the space between the electrodes.

The average height Hs of the spacer may be greater than a sum Tw of an average thickness Tb of the base layer and an average thickness Tt of the composite material layer. A ratio Hs/Tw of the average height Hs to the sum Tw may be greater than 1, 1.5 or more, 2 or more, or 3 or more. The ratio Hs/Tw may be 10 or less, 8 or less, 5 or less, or 4 or less. By setting this ratio to 1.5 or more, expansion of the electrode group can be particularly suppressed.

An average height Hs can be measured using the following method. First, a cross section of the separator in the thickness direction of the separator is imaged with an electron microscope to obtain an image of the cross section. Next, 20 arbitrary locations of the spacer are selected from the image, and the height of the spacer at those locations is measured. Next, the heights measured at the 20 locations are arithmetically averaged, and the obtained average value is set as the average height Hs. An average thickness Tb and an average thickness Tt can also be measured using a similar procedure.

The average thickness Tb of the base layer may be 5 μm or more, or 10 μm or more, and may be 30 μm or less, or 20 μm or less. The average thickness Tt of the composite material layer may be 1 μm or more, or 2 μm or more, and may be 5 μm or less, or 3 μm or less. The average height Hs of the spacer may be 10 μm or more, or 20 μm or more, and may be 100 μm or less, 50 μm or less, 40 μm or less, or 30 μm or less. These heights and thicknesses vary depending on the configurations of the positive electrode and the negative electrode, and may be numeric values outside the ranges given as examples here. Note that in order to make the interval between the electrode plates formed by the spacer as constant as possible, the spacer is usually formed to have a height that is as constant as possible.

The spacer may include a non-porous structure through which lithium ions do not pass. Such a spacer can be realized by forming the spacer under conditions that do not make the spacer porous. The method for forming the spacer having a non-porous structure is not particularly limited, and any known method may be used. For example, a spacer having a non-porous structure may be formed by printing the constituent material of the spacer as ink on the separator. Note that in this specification, "lithium ions do not pass through" means that lithium ions do not pass through in an amount that would affect the characteristic or shape of the battery, and includes a case where lithium ions move within the spacer in an amount that can be considered to substantially not be passing through.

If the spacer allows lithium ions to pass through, the lithium ions pass through the spacer during charging. The lithium ions that have passed through the spacer are deposited between the base layer and the negative electrode in the portion where the spacer is formed. As a result, the thickness in the laminating direction of the electrode group increases. For this reason, it is preferable that the spacer does not allow lithium ions to pass through. Note that in the case of a wound electrode group, the laminating direction means the radial direction of the wound electrode group.

An area S1 of the spacer may be 30% or less of an area S0 of the separator. Within this range, sufficient space for lithium metal to be deposited can be ensured. Note that the areas S1 and S0 are the areas in a view of the separator from the spacer side. A ratio S1/S0 of the area S1 to the area S0 may be 0.20 or less (20% or less) or 0.10 or less, or may be 0.03 or more (3% or more) or 0.05 or more. By setting this ratio to 0.05 or more (5% or more), the effect of suppressing an excessive temperature rise in the electrode group can be improved. Note that the areas S0 and S1 are areas in a plan view. In other words, the areas S0 and S1 are the areas of the separator and spacer, respectively, in a view from above.

The cross-sectional shape of the linear protrusion in a direction perpendicular to the extending direction of the linear protrusion is not limited, and may be rectangular or tapered. For example, the cross-sectional shape may be a trapezoid whose width narrows with increasing distance from the separator. Similarly, the cross-sectional shape of the dot-shaped protrusion is not limited, and may be rectangular or tapered (e.g., trapezoidal).

From one viewpoint, the linear protrusions are ridge-shaped protrusions. In order to improve the effect of suppressing an excessive temperature rise in the electrode group, the spacer preferably includes linear protrusions, and may be composed of only linear protrusions.

The linear protrusions may be mesh-shaped protrusions. By forming the linear protrusions in a mesh shape, the effect of suppressing contraction of the base layer can be improved, and therefore the effect of suppressing an excessive temperature rise in the electrode group can be improved.

The planar shapes of the linear protrusions may be a combination of polygons. Examples of mesh shapes include shapes obtained by combining polygons such that they share edges. Polygons include triangles, quadrilaterals, hexagons, and the like. Different types of polygons may also be combined. The linear protrusions may have a honeycomb shape in a plan view. As described above with respect to the mesh-shaped protrusions, the honeycomb-shaped protrusions can improve the effect of suppressing an excessive temperature rise in the electrode group. Alternatively, the linear protrusions may include a plurality of linear protrusions arranged in a stripe pattern.

A first resin constituting the spacer preferably has higher heat resistance than a second resin constituting the base layer. Here, high heat resistance means that the decomposition temperature or melting point of the first resin is higher than the decomposition temperature or melting point of the second resin. Note that each of the first resin and the second resin may also contain a plurality of types of resin.

(Composite Material Layer)

The composite material layer is preferably a porous layer. The method for forming the porous composite material layer is not particularly limited, and any known method may be used. For example, a porous composite material layer may be formed by printing the material containing the inorganic particles as ink onto the base layer.

The separator includes at least one composite material layer. The composite material layer may be formed on one of the two main surfaces of the base layer that is on the positive electrode side, or one of the two main surfaces of the base layer that is on the negative electrode side, or on each of the two main surfaces.

The composite material layer includes a polymer (hereinafter sometimes referred to as "polymer (PL)") and inorganic particles. The inorganic particles may include first particles and/or second particles. The first particles are particles of a lithium-containing phosphate. The second particles are particles other than the first particles. The composite material layer is a layer that allows lithium ions to pass therethrough.

The arrangement of the positive electrode, the negative electrode, the base layer, the composite material layer, the separator, and the spacer is not particularly limited, except that the separator and the spacer are arranged between the positive electrode and the negative electrode. The separator may be disposed such that the composite material layer faces the positive electrode, or the separator may be disposed such that the composite material layer faces the negative electrode. By disposing the composite material layer on the positive electrode side, it is possible to suppress deterioration of the base layer due to an oxidation reaction. On the other hand, by disposing the composite material layer on the negative electrode side, it is possible to suppress deterioration of the base layer due to a reduction reaction.

The spacer is formed on the separator. The spacer may be formed on the composite material layer or on the base layer. By forming the spacer on the composite material layer, the effect of suppressing thermal contraction of the base layer is particularly improved. By forming the spacer on the composite material layer, it becomes easier to obtain the effects of ensuring the battery capacity, improving the circulation of the electrolyte, and improving productivity. Examples of preferred arrangements include the following arrangements: positive electrode/composite material layer/base layer/spacer/negative electrode; and positive electrode/base layer/composite material layer/spacer/negative electrode.

The phosphate constituting the first particles may be at least one selected from the group consisting of lithium phosphate ($Li_3PO_4$), dilithium hydrogen phosphate ($Li_2HPO_4$), and lithium dihydrogen phosphate ($LiH_2PO_4$). Among these, lithium phosphate is preferred because it is highly effective in suppressing heat generation in the battery under abnormal conditions.

The average particle diameter of the first particles may be in the range of 0.1 $\mu$m to 1.0 $\mu$m (e.g., in the range of 0.1 $\mu$m to 0.5 $\mu$m, in the range of 0.1 $\mu$m to 0.2 $\mu$m, or in the range of 0.1 $\mu$m to 0.19 $\mu$m). The first particles may have an average particle diameter of 0.1 $\mu$m or more, or 0.15 $\mu$m or more. The average particle diameter of the first particles may be 1.0 $\mu$m or less, 0.5 $\mu$m or less, 0.3 $\mu$m or less, or 0.2 $\mu$m or less. By setting the average particle diameter to 0.1 $\mu$m or more, sufficient pores necessary for the electrolyte to permeate can be ensured. An average particle diameter of 1.0 $\mu$m or less is preferable from the viewpoint of forming a high-density layer of the first particles.

For the polymer (PL), a polymer having higher heat resistance than the main component of the base layer of the separator can be used. The polymer (PL) preferably contains at least one selected from the group consisting of aromatic polyamides, aromatic polyimides, and aromatic polyamide-imides. These are known as highly heat-resistant polymers (also known as polymers or resins). From the viewpoint of heat resistance, aramids, that is, meta-aramids (meta-type wholly aromatic polyamides) and para-aramids (para-type wholly aromatic polyamides) are preferred. A preferred example of the polymer (PL) is a meta-aramid. The polymer (PL) may be a known aromatic polyamide, aromatic polyimide, or aromatic polyamide-imide.

Examples of aromatic polyamides (polymers (PL)) include polymers that are formed by condensation polymerization of monomers having an aromatic skeleton and contain amide bonds in repeating units. Examples of aromatic polyamides (e.g., wholly aromatic polyamides) include meta-aromatic polyamides (e.g., meta-type wholly aromatic polyamides) and para-aromatic polyamides (e.g., para-type wholly aromatic polyamides). Wholly aromatic polyamides are also called aramids.

A preferred example of the second particles (inorganic particles) is particles constituted of an insulating inorganic compound that does not melt or decompose when the battery generates abnormal heat. The second particles may be inorganic particles that are generally used as inorganic fillers. Examples of materials for the second particles include oxides, oxide hydrates, hydroxides, nitrides, carbides, and sulfides, and these may contain metallic elements. The second particles may have an average particle diameter of 0.2 $\mu$m or more and 2 $\mu$m or less.

Examples of oxides and oxide hydrates include aluminum oxide, boehmite, magnesium oxide, titanium oxide, zirconium oxide, silicon oxide, yttrium oxide, and zinc oxide. Examples of nitrides include silicon nitride, aluminum nitride, boron nitride, and titanium nitride. Examples of carbides include silicon carbide, and boron carbide. Examples of sulfides include barium sulfate. Examples of hydroxides include aluminum hydroxide.

The material of the second particles may be a porous aluminosilicate such as zeolite, a layered silicate such as talc, barium titanate ($BaTiO_3$), strontium titanate ($SrTiO_3$), or the like. From the viewpoint of insulation properties, heat resistance, and the like, the material of the second particles may be at least one selected from the group consisting of aluminum oxide, boehmite, talc, titanium oxide, and magnesium oxide.

The average particle diameter of the second particles may be within the range given as an example for the average particle diameter of the first particles.

The inorganic particles may include the above-mentioned first particles and second particles that are not a phosphate. In this case, the composite material layer may include a first layer including the first particles and a second layer including the second particles. This configuration can particularly improve the effect of suppressing an excessive temperature rise in the electrode group. Note that the composite material layer may also be constituted of only the first layer or only the second layer.

The first layer and the second layer may be laminated on one of the two main surfaces of the base layer that is on the positive electrode side, on one of the two main surfaces of the base layer that is on the negative electrode side, or on different main surfaces. For example, the separator and the spacer may have a laminated structure of base layer/first layer/second layer/spacer, base layer/second layer/first layer/spacer, first layer/second layer/base layer/spacer, or second layer/first layer/base layer/spacer. Alternatively, the first layer and the second layer may be arranged on different main surfaces of the base layer. For example, the separator and the spacer may have a laminated structure of first layer/base layer/second layer/spacer, or second layer/base layer/first layer/spacer.

The first layer may contain the first particles as a main component. The content of the first particles in the first layer may be in the range of 50 mass% to 99 mass%, 85 mass% to 99 mass%, or 90 mass% to 98 mass%. The content may be 50 mass% or more, 70 mass% or more, 85 mass% or more, or 90 mass% or more. The content may be 99 mass% or less, 98 mass% or less, or 95 mass% or less. Within these ranges, the first particles have a sufficient surface area, making it easy to inactivate lithium at high temperatures.

The first layer may contain a solid component other than the first particles. For example, the first layer may contain a binder, an inorganic substance (e.g., inorganic particles) other than the first particles, a polymer (PL), and the like.

If the first layer contains a binder, the content of the binder in the first layer may be in the range of 1 mass% to 15 mass%, or in the range of 2 mass% to 10 mass%. The content of the binder in the first layer may be 1 mass% or more, or 2 mass% or more. The content of the binder in the first layer may be 15 mass% or less, or 10 mass% or less.

The binder contained in the first layer is not particularly limited, and examples thereof include polyolefins (polyethylene, polypropylene, copolymers of ethylene and α-olefin, etc.), fluorine-containing resins (polyvinylidene fluoride, polytetrafluoroethylene, polyvinyl fluoride, etc.), fluorine-containing rubbers (vinylidene fluoride-hexafluoropropylene-tetrafluoroethylene copolymers, ethylene-tetrafluoroethylene copolymers, etc.), styrene-butadiene copolymers and hydrogenated products thereof, acrylonitrile-butadiene copolymers and hydrogenated products thereof, acrylonitrile-butadiene-styrene copolymers and hydrogenated products thereof, and N-vinylacetamide.

(Second Layer)

As described above, the second layer contains second particles that are not the first particles (phosphate particles). Note that the second layer may or may not contain the first particles.

The second layer preferably contains a polymer (PL). The content of the polymer (PL) in the second layer may be in the range of 50 mass% to 100 mass% (e.g., in the range of 80 mass% to 100 mass% or 90 mass% to 100 mass%). The second layer may consist of only the polymer (PL).

The second layer may include the second particles as a main component. The content of the second particles in the second layer may be in the range of 50 mass% to 99 mass% (e.g., in the range of 85 mass% to 99 mass%). In this case, the second layer may also contain a binder. As examples of the binder, the binders given as examples in the description of the first layer can be used. The content of the second particles in the second layer may be 50 mass% or more, 70 mass% or more, 85 mass% or more, or 90 mass% or more. The content may also be 99 mass% or less, 98 mass% or less, or 95 mass% or less.

The thicknesses of the first and second layers can each independently be in the range of 0.2 μm to 10 μm (e.g., in the range of 1 μm to 8 μm, in the range of 2 μm to 4 μm, or in the range of 4 μm to 10 μm). For example, the first layer may have a thickness in the range of 0.2 μm to 10 μm and the second layer may have a thickness in the range of 0.2 μm to 10 μm. The first layer may have a thickness of 0.2 μm or more, 0.3 μm or more, or 0.5 μm or more, preferably 1 μm or more, more preferably 2 μm or more, more preferably 3 μm or more, and even more preferably 4 μm or more. The first layer may also have a thickness of 10 μm or less, 8 μm or less, 7 μm or less, or 5 μm or less. The second layer may have a thickness of 0.2 μm or more, 0.3 μm or more, or 0.5 μm or more, preferably 1 μm or more, more preferably 2 μm or more, more preferably 3 μm or more, and even more preferably 4 μm or more. The second layer may also have a thickness of 10 μm or less, 8 μm or less, 7 μm or less, or 5 μm or less. If at least one of the first layer and the second layer has a thickness of 0.2

μm or more, this is advantageous in terms of suppressing a rise in battery temperature in the event of an abnormality. If the thickness of at least one of the first layer and the second layer is 10 μm or less, this is advantageous in terms of the electrical characteristic of the battery.

If the composite material layer contains the first particles, the temperature rise of the battery in the event of an abnormality can be particularly suppressed. The mechanism for this is unclear at present. One possibility is that when the battery temperature rises abnormally, the first particles react with the lithium metal in the negative electrode, causing the reactivity of the surface of the lithium metal to decrease.

In another aspect, the present disclosure provides another lithium secondary battery (Z). The other lithium secondary battery (Z) differs from the above-mentioned lithium secondary battery (L) in (1) and (2) below. Since the other lithium secondary battery (Z) is the same as the lithium secondary battery (L) except for (1) and (2) below, redundant description is omitted.

(1) There is no limitation on the above-described shortest distance D.
(2) The spacer includes linear protrusions, and the width W of the linear protrusions in a plan view is 0.01 mm or more and 2.0 mm or less.

(Method for Forming Separator and Spacer)

There is no particular limitation on the method for producing the separator, and the separator may be produced using the following method. First, the base layer is prepared. The base layer may be a commercially-available base layer. Next, the composite material layer is formed on the base layer.

There is no particular limitation on the method for forming the composite material layer, and the composite material layer may be formed using the following method. First, a slurry (or coating liquid) is formed by mixing the components of the composite material layer with a liquid component (dispersion medium). Next, the slurry (or coating liquid) is applied to the base layer to form a coating film, and the coating film is then dried. In this manner, a composite material layer can be formed. There is no particular limitation on the liquid component used to form the slurry (or coating liquid). Examples of the liquid component include N-methyl-2-pyrrolidone. Note that if the composite material layer includes a first layer and a second layer, each layer may be formed using the method described above.

There is no particular limitation on each step in the forming of the composite material layer, and known methods can be applied. For example, the slurry (or coating liquid) may be applied using a known method such as a method using a bar coater. The drying may be performed using a known method such as drying by heating or natural drying.

The spacer is formed on the composite material layer or on the base layer. There is no particular limitation on the method for forming the spacer, and the spacer may be formed using the following method. First, a slurry or coating liquid is prepared by mixing components of the spacer and a liquid component. Next, the slurry or coating liquid is applied to a portion where the spacer is to be formed, and then dried. In this manner, the spacer can be formed. Examples of the liquid component include N-methyl-2-pyrrolidone. The slurry or coating liquid may be applied using a dispenser or may be applied using a known printing method such as gravure printing, inkjet printing, or screen printing. The drying may also be performed using a known method such as drying by heating or natural drying. In this manner, the separator is obtained.

Examples of constituent elements of the lithium secondary battery (L) will be specifically described below. Note that the constituent elements described below are merely examples, and the constituent elements of the lithium secondary battery (L) of the present embodiment are not limited to the following constituent elements. Constituent elements other than portions that are characteristic of this embodiment may be known constituent elements. The separator and spacer have been described above, and therefore redundant description will be omitted.

[Negative Electrode]

The negative electrode includes a negative electrode current collector. In the lithium secondary battery (L), lithium metal is deposited on the negative electrode current collector due to charging. More specifically, lithium ions contained in the non-aqueous electrolyte receive electrons on the negative electrode current collector due to charging and become lithium metal, which is then deposited on the negative electrode current collector. The lithium metal deposited on the negative electrode current collector dissolves into the non-aqueous electrolyte as lithium ions due to discharging. Note that the lithium ions contained in the non-aqueous electrolyte may be lithium ions derived from a lithium salt added to the non-aqueous electrolyte, may be lithium ions supplied from the positive electrode active material by charging, or may be both types of lithium ions.

The negative electrode current collector can be a conductive sheet. If the electrode group is of a wound type, a strip-shaped conductive sheet is used. Examples of the conductive sheet include a conductive film, a metal foil, and the like.

The surface of the conductive sheet may be smooth. This makes it easier for lithium metal from the positive electrode to be deposited evenly on the conductive sheet during charging. "Smooth" means that the conductive sheet has a maximum height roughness Rz of 20 μm or less. The conductive sheet may have a maximum height roughness Rz of 10 μm or less. The maximum height roughness Rz is measured in accordance with JIS (Japanese Industrial Standards) B 0601:2013.

The material of the negative electrode current collector (conductive sheet) may be any conductive material other than lithium metal and lithium alloy. The conductive material may be a metallic material such as a metal or an alloy. The conductive material is preferably a material that does not react with lithium. More specifically, a material that does not form any alloy or intermetallic compound with lithium is preferable. Examples of such conductive materials include copper (Cu), nickel (Ni), iron (Fe), and alloys containing these metal elements, as well as graphite with the basal plane preferentially exposed. Examples of the alloy include copper alloy and stainless steel (SUS). Copper and/or copper alloy are preferable because of their high electrical conductivity. The thickness of the negative electrode current collector is not particularly limited and may be in the range of 5 to 300 μm.

A negative electrode mixture layer may be formed on the surface of the negative electrode current collector. The negative electrode mixture layer is formed, for example, by applying a paste containing a negative electrode active material such as graphite to at least a portion of the surface of the negative electrode current collector. However, from the viewpoint of achieving a lithium secondary battery with a high capacity exceeding that of a lithium ion battery, the thickness of the negative electrode mixture layer is set to be sufficiently thin such that lithium metal can be deposited on the negative electrode.

The negative electrode may include a negative electrode current collector and a sheet-shaped lithium metal or lithium alloy disposed on the negative electrode current collector. That is, the negative electrode current collector may be provided in advance with an underlayer containing lithium metal (a layer of lithium metal or lithium alloy). The lithium alloy may contain an element other than lithium, such as aluminum, magnesium, indium, and zinc. By providing the underlayer in advance and depositing the lithium metal thereon during charging, dendritic deposition can be more effectively suppressed. The thickness of the underlayer is not particularly limited, but may be, for example, in the range of 5 μm to 25 μm.

[Positive Electrode]

The positive electrode includes, for example, a positive electrode current collector and a positive electrode mixture layer supported by the positive electrode current collector. The positive electrode mixture layer includes, for example, a positive electrode active material, a conductive material, and a binder. The positive electrode mixture layer may be formed on only one surface of the positive electrode current collector, or on both surfaces. The positive electrode is obtained, for example, by applying a positive electrode mixture slurry containing a positive electrode active material, a conductive material, and a binder to both sides of a positive electrode current collector, drying the coating, and then performing rolling.

The positive electrode active material is a material that absorbs and releases lithium ions. Examples of the positive electrode active material include lithium-containing transition metal oxides, transition metal fluorides, polyanions, fluorinated polyanions, and transition metal sulfides. Among these, lithium-containing transition metal oxides are preferred because they have low production costs and high average discharge voltages.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain one type of transition metal element or two or more types of transition metal elements. The transition metal element may be Co, Ni, and/or Mn. The lithium-containing transition metal oxide may contain one or more main group elements as necessary. Main group elements include Mg, Al, Ca, Zn, Ga, Ge, Sn, Sb, Pb, and Bi. The main group element may be Al or the like.

Among the lithium-containing transition metal oxides, composite oxides that contain Co, Ni, and/or Mn as transition metal elements, contain Al as an optional component in some cases, and have a layered rock-salt crystal structure are preferable in terms of obtaining high capacity. In this case, in the lithium secondary battery, the molar ratio $m_{Li}/m_M$ of the total amount $m_{Li}$ of lithium in the positive electrode and the negative electrode to the amount $m_M$ of a metal M other than lithium in the positive electrode may be set to, for example, 1.1 or less.

The conductive material is, for example, a carbon material. Examples of the carbon material include carbon black, acetylene black, ketjen black, carbon nanotubes, and graphite.

Examples of the binder include fluororesin, polyacrylonitrile, polyimide resin, acrylic resin, polyolefin resin, and rubber-like polymer. Examples of the fluororesin include polytetrafluoroethylene and polyvinylidene fluoride.

The positive electrode current collector is only required to be a conductive sheet. The conductive sheet may be a foil, a film, or the like. The surface of the positive electrode current collector may be coated with a carbon material.

Examples of the material for the positive electrode current collector (conductive sheet) include metal materials containing Al, Ti, Fe, and the like. The metal material may be Al, an Al alloy, Ti, a Ti alloy, an Fe alloy, or the like. The Fe alloy may be stainless steel (SUS). The thickness of the positive electrode current collector is not particularly limited and may be in the range of 5 to 300 $\mu$m.

[Non-Aqueous Electrolyte]

The non-aqueous electrolyte having lithium-ion conductivity contains, for example, a non-aqueous solvent, and lithium ions and anions dissolved in the non-aqueous solvent. The non-aqueous electrolyte may be in a liquid state or a gel state.

The liquid non-aqueous electrolyte is prepared by dissolving a lithium salt in a non-aqueous solvent. When the lithium salt is dissolved in the non-aqueous solvent, lithium ions and anions are generated.

The gel non-aqueous electrolyte contains a lithium salt and a matrix polymer, or a lithium salt, a non-aqueous solvent, and a matrix polymer. As the matrix polymer, for example, a polymer material that gels by absorbing a non-aqueous solvent is used. Examples of the polymer material include fluororesin, acrylic resin, and polyether resin.

As the lithium salt or anion, any known material used in the non-aqueous electrolyte of a lithium secondary battery can be used. Specifically, $BF_4^-$, $ClO_4^-$, $PF_6^-$, $CF_3SO_3^-$, $CF_3CO_2^-$, anions of imides, anions of oxalate complexes, and the like can be mentioned as examples. Examples of anions of imides include $N(SO_2CF_3)_2^-$, and $N(C_mF_{2m+1}SO_2)_x$ $(C_nF_{2n+1}SO_2)_y^-$ (where m and n are each independently an integer of 0 or 1 or more, and x and y are each independently 0, 1, or 2, and x+y=2 is satisfied). The anion of the oxalate complex may also contain boron and/or phosphorus. The anions of the oxalate complexes include bisoxalate borate anions, $BF_2(C_2O_4)^-$, $PF_4(C_2O_4)^-$, and $PF_2(C_2O_4)_2^-$. The non-aqueous electrolyte may contain one of these anions alone or two or more of them.

From the viewpoint of suppressing dendritic deposition of the lithium metal, the non-aqueous electrolyte preferably contains at least an anion of an oxalate complex. The interaction between the anion of the oxalate complex and lithium facilitates uniform deposition of the lithium metal in the form of fine particles. This makes it easier to suppress localized deposition of the lithium metal. The anions of the oxalate complex may be combined with other anions. The other anions may be $PF_6^-$ and/or the anions of an imide.

The non-aqueous electrolyte may contain $LiBF_2(C_2O_4)$ (lithium difluorooxalatoborate) as the solute (lithium salt).

Examples of the non-aqueous solvent include esters, ethers, nitriles, amides, and halogen-substituted compounds of these. The non-aqueous electrolyte may contain one of these non-aqueous solvents alone or two or more of them. Examples of the halogen-substituted compounds include fluorides.

Examples of the esters include carbonate esters and carboxylate esters. Examples of cyclic carbonate esters include ethylene carbonate, propylene carbonate, and fluoroethylene carbonate (FEC). Examples of chain carbonate esters include dimethyl carbonate (DMC), ethyl methyl carbonate (EMC), and diethyl carbonate. Examples of cyclic carboxylates include $\gamma$-butyrolactone and $\gamma$-valerolactone. Examples of chain carboxylates include ethyl acetate, methyl propionate, and methyl fluoropropionate.

Ethers include cyclic ethers and chain ethers. Examples of cyclic ethers include 1,3-dioxolane, 4-methyl-1,3-dioxolane, tetrahydrofuran, and 2-methyltetrahydrofuran. Examples of chain ethers include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the non-aqueous electrolyte is, for example, 0.5 mol/L or more and 3.5 mol/L or less. The concentration of the anions in the non-aqueous electrolyte may be 0.5 mol/L or more and 3.5 mol/L or less. The concentration of the anions of the oxalate complex in the non-aqueous electrolyte may be 0.05 mol/L or more and 1 mol/L or less.

The non-aqueous electrolyte may contain an additive. The additive may form a coating on the negative electrode. The formation of the coating film derived from the additive on the negative electrode makes it easier to suppress the generation of dendrites. Examples of such additives include vinylene carbonate, fluoroethylene carbonate (FEC), vinyl ethyl carbonate (VEC), and the like.

[Exterior Body]

The exterior body accommodates the positive electrode, the negative electrode, the separator, the spacer disposed on the separator, and the non-aqueous electrolyte. The exterior body is not particularly limited, and may be an exterior body used in a known lithium secondary battery.

The present disclosure further discloses a composite member (C) for use in a battery. The composite member (C) includes the separator and the spacer, which were described as constituent elements of the lithium secondary battery (L). That is, the composite member (C) includes the separator and the spacer formed on the separator, which were described above. The separator and the spacer have been described above, and therefore redundant description will be omitted. The composite member (C) can be used as a separator for a lithium secondary battery. The composite member (C) includes a separator having a base layer and a composite material layer, and a spacer. The spacer can be formed on the base layer or on the composite material layer.

If the width of the spacer is too large, wrinkles are likely to form in the separator due to volume contraction during drying when the spacer is formed. If wrinkles form in the separator, this can hinder the formation of the wound electrode group and can cause a crack in the composite material layer. Since the spacer of the composite member (C) has the above-mentioned predetermined size, it is possible to suppress the formation of wrinkles in the separator when the spacer is formed.

Hereinafter, an example of the lithium secondary battery (L) of this embodiment will be specifically described with reference to the drawings. The above-described constituent elements can be applied to the constituent elements of the lithium secondary battery of the example described below. In addition, the constituent elements of the example described below can be modified based on the above description. In addition, the matter described below may be applied to the above embodiment. In addition, in the lithium secondary battery described below, constituent elements that are not essential to the lithium secondary battery according to the present disclosure may be omitted. Note that in the following diagrams, the scales of the constituent elements have been changed to facilitate understanding.

(First Embodiment)

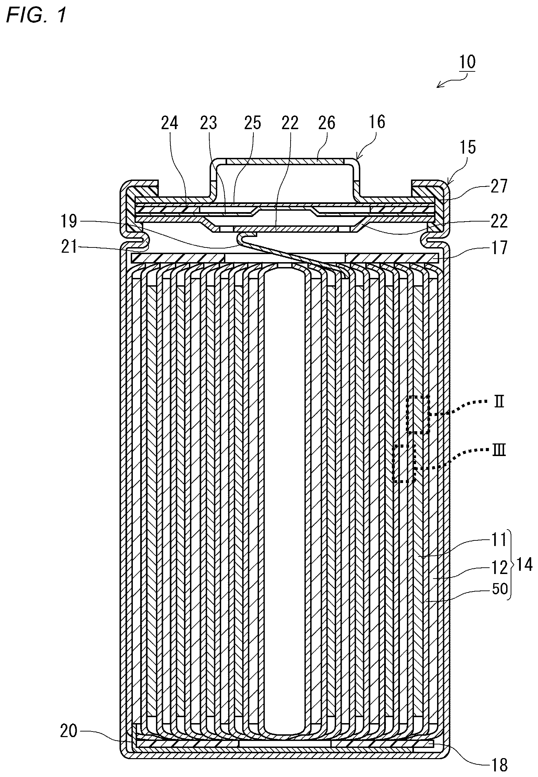

FIG. 1 is a vertical cross-sectional view schematically showing an example of a lithium secondary battery according to a first embodiment. Note that in FIG. 1, the spacers and the spaces formed by the spacers are omitted. A cylindrical lithium secondary battery 10 shown in FIG. 1 includes a cylindrical battery case, and a wound electrode group 14 and non-aqueous electrolyte (not shown) accommodated in the battery case. The battery case includes a case body 15, which is a bottomed cylindrical metal container, and a sealing body 16 that seals the opening of the case body 15. A gasket 27 is disposed between the case body 15 and the sealing body 16. The gasket 27 ensures the airtightness of the battery case. Insulating plates 17 and 18 are arranged inside the case body 15 on both ends in the winding axis direction of the electrode group 14.

The case body 15 has a step portion 21 formed, for example, by pressing a part of the side wall of the case body 15 from the outside. The step portion 21 may be formed in an annular shape along the circumferential direction of the case body 15 on the side wall of the case body 15. In this case, the sealing body 16 is supported by the surface on the opening side of the step portion 21.

The sealing body 16 includes a filter 22, a lower valve body 23, an insulating member 24, an upper valve body 25, and a cap 26. In the sealing body 16, these members are laminated in the stated order. The sealing body 16 is attached to the opening of the case body 15 such that the cap 26 is located outside the case body 15 and the filter 22 is located inside the case body 15. Each of the above-mentioned members constituting the sealing body 16 has, for example, a disk shape or a ring shape. The lower valve body 23 and the upper valve body 25 are connected to each other at their respective central portions, and the insulating member 24 is interposed between their respective peripheral edge portions. The filter 22 and the lower valve body 23 are connected to each other at their respective central portions. The upper valve body 25 and the cap 26 are connected to each other at their respective central portions. That is, all of the members except for the insulating member 24 are electrically connected to each other.

An air hole (not shown) is formed in the lower valve body 23. For this reason, when the internal pressure of the battery case increases due to abnormal heat generation or the like, the upper valve body 25 bulges toward the cap 26 and separates from the lower valve body 23. As a result, the electrical connection between the lower valve body 23 and the upper valve body 25 is cut off. When the internal pressure increases further, the upper valve body 25 breaks, and gas is discharged from an opening (not shown) formed in the cap 26.

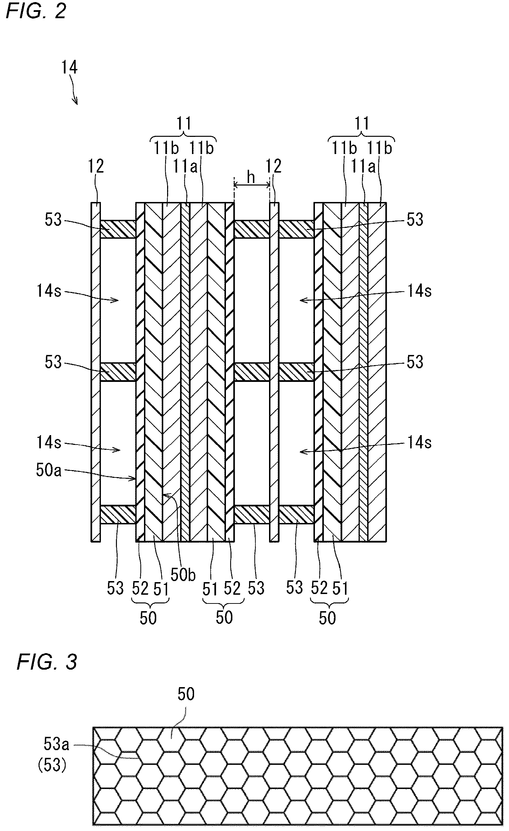

FIG. 2 is an enlarged view of a portion of the electrode group 14. FIG. 2 includes a portion near a positive electrode surrounded by region II in FIG. 1, and a portion near a negative electrode surrounded by region III in FIG. 1.

The electrode group 14 includes a positive electrode 11, a negative electrode 12, separators 50, and spacers 53. The positive electrode 11, the negative electrode 12, and the separators 50 are all strip-shaped. The spacers 53 are formed on the separators 50 (composite material layers 52). The electrode group 14 is formed by winding the positive electrode 11, the negative electrode 12, and the separators 50 such that the separators 50 are disposed between the positive electrode and the negative electrode 12.

The positive electrode 11 includes a positive electrode current collector 11a and positive electrode mixture layers 11b. The positive electrode current collector 11a is electrically connected via a positive electrode lead 19 to the cap 26, which functions as a positive electrode terminal. In FIG. 2, a negative electrode (negative electrode current collector) on which no lithium metal is deposited is shown as the negative electrode 12. The negative electrode 12 is electrically connected via a negative electrode lead 20 to the case body 15, which functions as a negative electrode terminal.

As shown in FIG. 2, the separators 50 each include a base layer 51 and a composite material layer 52. The separators 50 have first main surfaces 50a facing the negative electrode 12 and second main surfaces 50b facing the positive electrode 11. In the example shown in FIG. 2, the spacers 53 are formed on the first main surfaces 50a. The above-mentioned composite member (C) includes the separators 50 and the spacers 53.

In the first embodiment, the composite material layer 52 is formed on one of the two main surfaces of the base layer 51 that is on the negative electrode 12 side. The spacer 53 is formed on the composite material layer 52 and is in contact with the negative electrode 12. The spacer 53 forms a space 14s between the positive electrode 11 and the negative electrode 12 (between the negative electrode 12 and the separator 50). FIG. 2 shows a height h of the spacer 53.

In the lithium secondary battery 10, lithium metal is deposited on the negative electrode 12 during charging. Since the spaces 14s are present between the positive electrode 11 and the negative electrode 12, the change in volume of the electrode group 14 that accompanies the deposition of lithium metal is reduced, whereby the cycle characteristic improves.

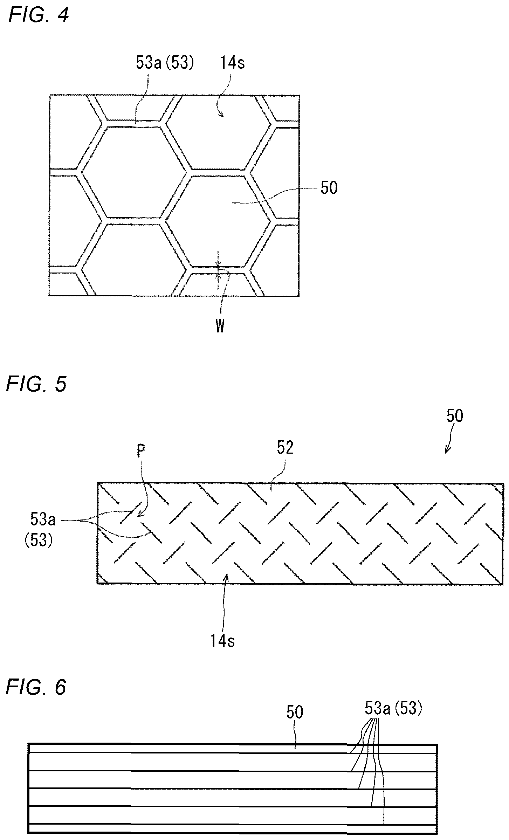

An example of the planar shape of the spacer 53 is shown in FIG. 3, and a partially-enlarged view of FIG. 3 is shown in FIG. 4. In the example shown in FIG. 3, the spacer 53 is constituted of linear protrusions 53a. The linear protrusions 53a are arranged in a mesh pattern, and more specifically, are uniformly formed in a honeycomb pattern. The honeycomb pattern is a pattern in which a plurality of hexagons are arranged so as to share edges with each other. The regions where the linear protrusions 53a are not formed constitute the spaces 14s. FIG. 4 shows a width W of the linear protrusion 53a. The width W of the linear protrusion is the length (width) of the linear protrusion 53a in a direction perpendicular to the direction in which the linear protrusion 53a extends in a plan view.

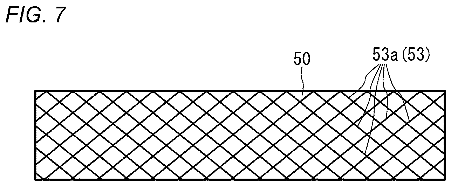

Other examples of the planar shape of the spacer 53 are shown in FIGS. 5 to 7. Note that FIGS. 3 to 7 are diagrams showing the separator 50 and the spacer 53 as viewed in a plan view. The spacer 53 in FIG. 5 includes a plurality of linear protrusions 53a spaced apart from one another. A gap P is present between the linear protrusions 53a. The region where the linear protrusions 53a are not formed constitutes the space 14s. The spacer 53 in FIG. 6 includes a plurality of linear protrusions 53a arranged in a stripe pattern. The spacer 53 in FIG. 7 includes a plurality of linear protrusions 53a arranged in a lattice pattern.

In the first embodiment, a cylindrical lithium secondary battery including a wound electrode group has been described. However, the lithium secondary battery of this embodiment is not limited to the first embodiment, and can be applied to other embodiments as well. The shape of the lithium secondary battery can be selected as appropriate from various shapes such as a cylindrical shape, a coin shape, a rectangular shape, a sheet shape, and a flat shape, depending on the application. The form of the electrode group is not particularly limited, and may be a laminated type.

(Supplementary Notes)

The above description of the embodiments discloses the following techniques.

(Technique 1)

A lithium secondary battery including:

a positive electrode; a negative electrode; a separator disposed between the positive electrode and the negative electrode; a spacer disposed on the separator; and a non-aqueous electrolyte having lithium-ion conductivity, in which the negative electrode is an electrode onto which lithium metal is deposited during charging and from which the lithium metal dissolves during discharging, the separator includes a base layer and a composite material layer, in a plan view, the shortest distance from any point on the spacer to an outer edge of the spacer is less than 1.5 mm, and the spacer has a width of 0.01 mm or more, and the composite material layer contains a polymer and inorganic particles.

(Technique 2)

The lithium secondary battery according to technique 1, in which the composite material layer is a porous layer.

(Technique 3)

The lithium secondary battery according to technique 1 or 2, in which the polymer includes at least one selected from the group consisting of an aromatic polyamide, an aromatic polyimide, and an aromatic polyamide-imide.

(Technique 4)

The lithium secondary battery according to any one of techniques 1 to 3, in which the separator has a first main surface facing the negative electrode and a second main surface facing the positive electrode, and the spacer is formed on the first main surface.

(Technique 5)

The lithium secondary battery according to any one of techniques 1 to 4, in which the spacer is formed on the composite material layer.

(Technique 6)

The lithium secondary battery according to any one of techniques 1 to 5, in which the spacer includes linear protrusions.

(Technique 7)

The lithium secondary battery according to technique 6, in which a planar shape of the linear protrusions is a shape obtained by combining polygons.

(Technique 8)

The lithium secondary battery according to technique 6, in which a planar shape of the linear protrusions is a honeycomb shape.

(Technique 9)

The lithium secondary battery according to technique 6, in which the linear protrusions include a plurality of linear protrusions arranged in a stripe pattern.

(Technique 10)

A composite member including:

a separator having a base layer and a composite material layer; and a spacer,
wherein in a plan view, the shortest distance from any point on the spacer to an outer edge of the spacer is less than 1.5 mm, and the spacer has a width of 0.01 mm or more, and
the composite material layer contains a polymer and inorganic particles.

(Technique 11)

The composite member according to technique 10, in which the composite material layer is a porous layer.

(Technique 12)

The composite member according to technique 10 or 11, in which the polymer includes at least one selected from the group consisting of an aromatic polyamide, an aromatic polyimide, and an aromatic polyamide-imide.

(Technique 13)

The composite member according to any one of techniques 10 to 12, in which the spacer is formed on the composite material layer.

(Technique 14)

The composite member according to any one of techniques 10 to 13, in which the spacer includes linear protrusions.

(Technique 15)

The composite member according to technique 14, in which a planar shape of the linear protrusions is a shape obtained by combining polygons.

(Technique 16)

The composite member according to technique 14, in which a planar shape of the linear protrusions is a honeycomb shape.

(Technique 17)

The composite member according to technique 14, in which the linear protrusions include a plurality of linear protrusions arranged in a stripe pattern.

[Working Example]

The lithium secondary battery (L) according to this embodiment will be specifically described below based on a working example. The present disclosure is not limited to the following working example.

(Battery A1)

A lithium secondary battery A1 was produced using the following procedure.

(1) Preparation of Positive Electrode

A rock-salt lithium-containing transition metal oxide (NCA: positive electrode active material) that contains Li, Ni, Co, and Al (the molar ratio of Li to the total of Ni, Co, and Al is 1.0) and has a layered structure was prepared. This lithium-containing transition metal oxide (NCA), acetylene black (AB; conductive material), and polyvinylidene fluoride (PVdF; binder) were mixed with a mass ratio of NCA:AB:PVdF = 95:2.5:2.5, and an appropriate amount of N-methyl-2-pyrrolidone (NMP) was added and stirred to prepare a positive electrode mixture slurry. Next, the obtained positive electrode mixture slurry was applied onto both sides of a strip-shaped Al foil (positive electrode current collector) and then dried to form a coating film of the positive electrode mixture. Next, the coating film was rolled using a roller. Finally, the resulting laminate of the positive electrode current collector and the positive electrode mixture was cut to a predetermined electrode size to prepare a positive electrode having positive electrode mixture layers on both surfaces of the positive electrode current collector.

(2) Preparation of Negative Electrode

The negative electrode used was a strip-shaped copper foil (thickness: 12 $\mu$m) with rolled lithium metal layers (thickness: 25 $\mu$m) provided on both sides.

(3) Preparation of Separator and Spacer

First, a strip-shaped porous polyethylene film (average thickness: 10 $\mu$m) was prepared as a base layer. Next, a porous composite material layer (average thickness: 2 $\mu$m) was formed on one surface of the base layer. The composite material layer was formed by forming the second layer and the first layer in that order on the base layer.
The second layer was formed as follows. First, N-methyl-2-pyrrolidone (NMP) and calcium chloride were mixed at a mass ratio of 94.2:5.8. The mixture was heated to about 80°C until the calcium chloride was completely dissolved. The solution was then returned to room temperature, and 2200 g of the solution was collected, after which 0.6 mol of paraphenylenediamine (PPD) was added and completely dissolved. While this solution was kept at about 20°C, 0.6 mol of terephthalic acid dichloride (TPC) was added little by little. The obtained solution was aged at about 20°C for 1 hour to obtain a polymerization liquid. Next, 100 g of this polymerization liquid was mixed with an N-methyl-2-pyrrolidone solution in which 5.8 mass% of calcium chloride was dissolved, to obtain a solution (coating liquid) containing paraphenylene terephthalamide (PPTA), which is an aromatic polyamide (aramid), at a concentration of 2 mass%.
Next, the coating liquid was applied onto the base layer by a slot die method to form a coating film. Next, the base layer on which the coating film was formed was left to stand for 1 hour in an atmosphere at a temperature of 25°C and a relative humidity of 70% to cause the aromatic polyamide to be deposited. Next, the NMP and calcium chloride in the coating film were removed by rinsing with water. The coating film was then dried at 60°C for 5 minutes to form a second layer.
The first layer was formed as follows. First, particles of lithium phosphate ($Li_3PO_4$) and poly(N-vinylacetamide) (PNVA) were mixed at a mass ratio of 100:8 to obtain a mixture. The lithium phosphate particles used had a volume-based median diameter of 0.19 $\mu$m. Water (ion-exchanged water) was added to the obtained mixture and stirred to prepare a slurry (coating liquid) with a solid content concentration of 12 mass%. The slurry was then applied onto the second layer through microgravure coating to form a coating film. Next, the coating film was dried in a drying oven attached to a coating machine. In this manner, the first layer was formed. In this manner, the composite material layer was formed.

Next, a coating liquid containing polyvinylidene fluoride and alumina particles (inorganic filler) was discharged onto the composite material layer using a dispenser so as to form a stripe pattern as shown in FIG. 6. Thereafter, the coating liquid was dried in a vacuum. In this manner, the non-porous spacer in a stripe pattern shown in FIG. 6 was formed. At this time, each linear protrusion was formed so as to have an average height of 30 $\mu$m and a width W of 0.01 mm.

(4) Preparation of Non-Aqueous Electrolyte

Ethylene carbonate (EC) and dimethyl carbonate (DMC) were mixed together at a volume ratio of EC:DMC=30:70. A liquid non-aqueous electrolyte was prepared by dissolving $LiPF_6$ and $LiBF_2(C_2O_4)$ in the obtained mixed solvent such that the concentration of $LiPF_6$ was 1 mol/L and the concentration of $LiBF_2(C_2O_4)$ was 0.1 mol/L.

(5) Production of Battery

An Al tab was attached to the positive electrode obtained above. A Ni tab was attached to the negative electrode above. In an inert gas atmosphere, the positive electrode and the negative electrode were spirally wound with the separators interposed therebetween to prepare a wound electrode group. At this time, the separators were disposed such that the spacers faced the positive electrode.

The obtained electrode group was accommodated in a bag-shaped exterior body made of a laminate sheet having an Al layer, the above-described non-aqueous electrolyte was injected into the exterior body accommodating the electrode group, and then the exterior body was sealed. In this manner, the lithium secondary battery A1 was produced.

(Battery A2)

A battery A2 was produced in the same manner and under the same conditions as the battery A1 except that the pattern of the spacer was changed. In the battery A2, the spacer was formed in a honeycomb pattern as shown in FIG. 3, instead of in a stripe pattern. The height and width of the linear protrusions were the same as those of the separator of the battery A1.

(Batteries A3 to A5 and Batteries C2 to C9)

Batteries A3 to A5 and batteries C2 to C9 were produced in the same manner and under the same conditions as the battery A1, except that the pattern of the spacer, the width W of the linear protrusions, whether or not there is a composite material layer, and the electrode that the spacer faces (the direction of arrangement of the separators) were changed as shown in Table 1. Note that in all of the batteries, the average height of the spacer was the same as that of the battery A1 (30 $\mu$m). In the battery C7, a non-porous layer formed using only polymer was disposed at the position of the composite material layer.

(Battery C1)

A battery C1 was produced in the same manner and under the same conditions as the battery A1, except that the composite material layer and the spacer were not formed. The separator of the battery C1 is constituted of only a base layer, and no spacer is formed on the base layer.

The batteries produced in this manner were evaluated using the following method.

(Charging/Discharging Test)

A charging/discharging test was performed on each of the obtained batteries. In the charging/discharging test, the battery was charged under the following conditions in a thermostatic chamber at 25°C, then was allowed to rest for 20 minutes and was discharged under the following conditions.

(Charging)

The battery was charged with a constant current of 2.15 mA per unit area ($cm^2$) of the electrode until the battery voltage reached 4.1 V, and then was charged with a constant voltage of 4.1 V until the current value per unit area of the electrode reached 0.54 mA.

(Discharging)

The battery was discharged with a constant current of 2.15 mA per unit area of the electrode until the battery voltage reached 3.75 V.

(Discharge Capacity Retention Rate)

In the above charging/discharging test, the discharge capacity C(1) at the first cycle and the discharge capacity C(50) at the 50th cycle were measured. Then, the discharge capacity retention rate was calculated using the following formula.

$$\text{Discharge capacity retention rate (\%)} = 100 \times C(50)/C(1)$$

(Expansion Rate Near Negative Electrode)

With the above charging and discharging constituting one cycle, the prepared battery was charged up to the second cycle. Then, the battery before charging and discharging and the battery charged up to the second cycle were disassembled, and a laminate of a positive electrode, a negative electrode, and two separators on both sides of the negative electrode was extracted. Disassembly was performed in an inert gas atmosphere. The extracted laminate of the positive electrode, the negative electrode, and the separators was washed with dimethyl carbonate and then dried, and the thickness of the laminate was measured. The thickness of the laminate was measured using a Peacock Digital Thickness Gauge G2-205M. The thickness was then measured at any five points within the laminate, and the arithmetic average of the five measured values was taken as the average thickness of the laminate. Next, an average thickness X was calculated by subtracting the thicknesses of the two base layers and the thicknesses of the two composite material layers from this average thickness. Then, the expansion rate (%) near the negative electrode was calculated with the following formula, using the average thickness X(0) before charging/discharging and the average thickness X(2) at the second cycle.

$$\text{Expansion rate near negative electrode (\%)} = 100 \times (X(2) - X(0))/X(0)$$

Some of the battery preparation conditions and evaluation results are shown in Table 1.

[Table 1]

| | Electrode that spacers face | Pattern of spacers | Composite material layer | Width W of linear protrusion (mm) | Expansion rate near negative electrode | Discharge capacity retention rate (%) |
|---|---|---|---|---|---|---|
| C1 | No spacer | None | None | None | 98% | 98 |
| C2 | Positive electrode | Stripe | None | 0.005 | 50% | 95 |
| C3 | Positive electrode | Honeycomb | None | 0.01 | 10% or less | 88 |
| C4 | Positive electrode | Stripe | None | 0.01 | 10% or less | 89 |
| C5 | Positive electrode | Stripe | None | 2.0 | 10% or less | 83 |
| C6 | Negative electrode | Stripe | None | 2.0 | 10% or less | 82 |
| C7 | Positive electrode | Stripe | None (*2) | 2.0 | 10% or less | 82 |
| C8 | Positive electrode | Stripe | Present (*1) | 3.0 | 10% or less | 78 |
| C9 | Negative electrode | Stripe | Present (*1) | 3.0 | 10% or less | 77 |
| A1 | Positive electrode | Stripe | Present | 0.01 | 10% or less | 98 |
| A2 | Positive electrode | Honeycomb | Present (*1) | 0.01 | 10% or less | 98 |
| A3 | Positive electrode | Stripe | Present (*1) | 2.0 | 10% or less | 98 |
| A4 | Positive electrode | Stripe | Present (*1) | 2.0 | 10% or less | 95 |

(continued)

|  | Electrode that spacers face | Pattern of spacers | Composite material layer | Width W of linear protrusion (mm) | Expansion rate near negative electrode | Discharge capacity retention rate (%) |
|---|---|---|---|---|---|---|
| A5 | Negative electrode | Stripe | Present (*1) | 2.0 | 10% or less | 95 |
| (*1) This is the same as the composite material layer of the battery A1. (*2) However, a polymer layer is present | | | | | | |

The batteries A1 to A5 are batteries according to the present disclosure, and the batteries C1 to C9 are batteries of comparative examples. Note that the shortest distance D of the spacers of the batteries C8 and C9 is 1.5 mm. The batteries A1 to A5 were able to suppress expansion near the negative electrode and achieved a high capacity retention rate (favorable cycle characteristic).

[Industrial Applicability]

The present disclosure is applicable to lithium secondary batteries and composite members. For example, the lithium secondary battery according to the present disclosure can be used in electronic devices such as mobile phones, smartphones, and tablet terminals, electric vehicles including hybrids and plug-in hybrids, home storage batteries combined with solar cells, and the like.

Although the present invention has been described in terms of the presently preferred embodiments, such disclosure is not to be interpreted as limiting. Various modifications and variations will no doubt become apparent to those skilled in the art to which this invention pertains upon reading the above disclosure. It is therefore intended that the appended claims be interpreted to cover all such variations and modifications as do not depart from the true spirit and scope of the invention.

[Reference Signs List]

10: lithium secondary battery; 11: positive electrode; 12: negative electrode; 14: electrode group; 14s: space; 50: separator; 51: base layer; 50a, 50b: main surface; 52: composite material layer; 53: spacer; 53a: protrusion

**Claims**

1.   A lithium secondary battery comprising:

a positive electrode; a negative electrode; a separator disposed between the positive electrode and the negative electrode; a spacer disposed on the separator; and a non-aqueous electrolyte having lithium-ion conductivity, wherein the negative electrode is an electrode onto which lithium metal is deposited during charging and from which the lithium metal dissolves during discharging, the separator includes a base layer and a composite material layer, in a plan view, the shortest distance from any point on the spacer to an outer edge of the spacer is less than 1.5 mm, and the spacer has a width of 0.01 mm or more, and the composite material layer contains a polymer and inorganic particles.

2.   The lithium secondary battery according to claim 1, wherein the composite material layer is a porous layer.

3.   The lithium secondary battery according to claim 1 or 2, wherein the polymer includes at least one selected from the group consisting of an aromatic polyamide, an aromatic polyimide, and an aromatic polyamide-imide.

4.   The lithium secondary battery according to claim 1 or 2,

wherein the separator has a first main surface facing the negative electrode and a second main surface facing the positive electrode, and the spacer is formed on the first main surface.

5.   The lithium secondary battery according to claim 1 or 2, wherein the spacer is formed on the composite material layer.

6. The lithium secondary battery according to claim 1 or 2, wherein the spacer includes linear protrusions.

7. The lithium secondary battery according to claim 6, wherein a planar shape of the linear protrusions is a shape obtained by combining polygons.

8. The lithium secondary battery according to claim 6, wherein a planar shape of the linear protrusions is a honeycomb shape.

9. The lithium secondary battery according to claim 6, wherein the linear protrusions include a plurality of linear protrusions arranged in a stripe pattern.

10. A composite member comprising:

a separator having a base layer and a composite material layer; and a spacer,
wherein in a plan view, the shortest distance from any point on the spacer to an outer edge of the spacer is less than 1.5 mm, and the spacer has a width of 0.01 mm or more, and
the composite material layer contains a polymer and inorganic particles.

11. The composite member according to claim 10, wherein the composite material layer is a porous layer.

12. The composite member according to claim 10 or 11, wherein the polymer includes at least one selected from the group consisting of an aromatic polyamide, an aromatic polyimide, and an aromatic polyamide-imide.

13. The composite member according to claim 10 or 11, wherein the spacer is formed on the composite material layer.

14. The composite member according to claim 10 or 11, wherein the spacer includes linear protrusions.

15. The composite member according to claim 14, wherein a planar shape of the linear protrusions is a shape obtained by combining polygons.

16. The composite member according to claim 14, wherein a planar shape of the linear protrusions is a honeycomb shape.

17. The composite member according to claim 14, wherein the linear protrusions include a plurality of linear protrusions arranged in a stripe pattern.

FIG. 1

*FIG. 2*

*FIG. 3*

FIG. 4

53a (53)  14s

50

W

FIG. 5

P        52        50

53a
(53)

14s

FIG. 6

50        53a (53)

FIG. 7

## INTERNATIONAL SEARCH REPORT

| International application No. |
| --- |
| **PCT/JP2023/027197** |

**A. CLASSIFICATION OF SUBJECT MATTER**

***H01M 10/052***(2010.01)i; ***H01M 4/134***(2010.01)i; ***H01M 50/423***(2021.01)i; ***H01M 50/434***(2021.01)i;
***H01M 50/443***(2021.01)i; ***H01M 50/446***(2021.01)i; ***H01M 50/451***(2021.01)i; ***H01M 50/46***(2021.01)i;
***H01M 50/463***(2021.01)i
FI:  H01M10/052; H01M4/134; H01M50/423; H01M50/434; H01M50/443 M; H01M50/446; H01M50/451; H01M50/46;
H01M50/463 B

According to International Patent Classification (IPC) or to both national classification and IPC

**B. FIELDS SEARCHED**

Minimum documentation searched (classification system followed by classification symbols)

H01M10/052; H01M4/134; H01M50/423; H01M50/434; H01M50/443; H01M50/446; H01M50/451; H01M50/46;
H01M50/463

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2015-138770 A (ASAHI KASEI E-MATERIALS CORP.) 30 July 2015 (2015-07-30) paragraphs [0012], [0015], [0056]-[0064], [0070]-[0076], [0090] | 1-17 |
| Y | | 1-17 |
| Y | WO 2022/045127 A1 (PANASONIC INTELLECTUAL PROPERTY MANAGEMENT CO., LTD.) 03 March 2022 (2022-03-03) paragraphs [0013], [0057]-[0059], [0062], [0080], [0095], fig. 5-7 | 1-17 |
| A | JP 2021-174701 A (KYOCERA CORP.) 01 November 2021 (2021-11-01) | 1-17 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 October 2023** | **24 October 2023** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

## INTERNATIONAL SEARCH REPORT
### Information on patent family members

International application No.

**PCT/JP2023/027197**

| Patent document cited in search report | | | Publication date (day/month/year) | Patent family member(s) | Publication date (day/month/year) |
|---|---|---|---|---|---|
| JP | 2015-138770 | A | 30 July 2015 | (Family: none) | |
| WO | 2022/045127 | A1 | 03 March 2022 | CN 115885404 A paragraphs [0023], [0071]-[0073], [0076], [0077], [0096], [0097], [0117], fig. 5-7 | |
| JP | 2021-174701 | A | 01 November 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2020066254 A1